# EUROPÄISCHE PATENTSCHRIFT

(11) **EP 0 542 157 B1**
(45) Veröffentlichungstag und Bekanntmachung des Hinweises auf die Patenterteilung: **29.05.1996**
(21) Anmeldenummer: 92119068.2
(22) Anmeldetag: 06.11.1992
(51) Int. Cl.: F16B 39/28, G02C 1/08, G02C 5/22, A61C 13/08

(54) **Schraubsicherung**
Screw fixation security
Sécurité de fixation par vis

(30) Priorität: 09.11.1991 DE 9114045 U
(43) Veröffentlichungstag der Anmeldung: 19.05.1993
(73) Patentinhaber: OBE-Werk Ohnmacht & Baumgärtner GmbH & Co. KG, D-75228 Ispringen (DE)
(72) Erfinder: Wagner,Reiner,Dipl.-Ing., W-7536 Ispringen (DE); Lehnert,Otto, W-6920 Sinsheim-Hoffenheim (DE)
(74) Vertreter: Gleiss & Grosse

(56) Entgegenhaltungen:
- CH-A- 0 609 754
- DE-A- 3 002 193
- DE-A- 3 318 794
- DE-A- 3 335 046
- DE-B- 1 196 397
- DE-B- 1 224 058
- DE-U- 8 815 277
- FR-A- 2 591 762
- US-A- 3 006 246

## Beschreibung

Die Erfindung geht aus von einer Schraubsicherung mit dem im Oberbegriff des Anspruchs 1 angegebenen Merkmalen.

Eine solche Schraubsicherung ist aus der Druckschrift CH 609 754 bekannt. Darin ist eine Schraube gezeigt, deren Schraubenschaft mit einer aus Kunststoff bestehenden Hülse oder Büchse ummantelt ist. Diese Kunststoffbüchse wird einerseits begrenzt durch den Schraubenkopf und andererseits durch das Schraubengewinde. Mithin greift ein Abschnitt der Kunststoffbüchse in den Gewindeabschnitt der Schraube ein.

Beim Herausschrauben einer solchen Schraube besteht nun die Gefahr, daß das Gewinde sich in die Kunststoffbüchse hineindreht und deshalb diese nicht mitnimmt. Die Kunststoffbüchse löst sich dabei entweder vollständig von der Schraube oder zumindest so weit, daß eine nochmalige Verwendung ausgeschlossen ist.

Die Aufgabe der vorliegenden Erfindung besteht deshalb darin, eine Schraubsicherung vorzusehen, der die vorgenannten Nachteile nicht anhaften. Insbesondere soll die Wiederverwendbarkeit verbessert werden.

Diese Aufgabe wird durch die Merkmale des Anspruchs 1 gelöst. Dadurch, daß an dem dem Schraubenkopf abgewandten Ende des Schraubenhals ein Ringbund vorgesehen ist, der nicht mit einem Gewinde versehen ist und der als Anschlag für den Kunststoffring dient, wird sicher gewährleistet, daß der Kunststoffring beim Ausschrauben auf dem Schraubenhals verbleibt.

Vorteilhafterweise steht der Außendurchmesser D₂ des eingelassenen, insbes. eingespritzten Kunststoffringes zum Durchmesser D₁ im Verhältnis 1,05 bis 1,09. Durch dieses Verhältnis entsteht ein Übermaß A, so daß es zu einer reibschlüssigen Verbindung zwischen der Schraube und dem ersten Teil kommt.

Vorteilhafterweise verjüngt sich der Schraubenhals mit eingelassenem Kunststoffring zum Schraubenkopf hin, wodurch es zu einer einfacheren Einführung des Kunststoffringes in die Durchgangsbohrung kommt. Hierbei hat sich gezeigt, daß vorteilhafterweise sich der Kunststoffring vorzugsweise unter 6° radial verjüngt.

Sitzt der Kunststoffring am Schraubenhals auf, so ist es von Vorteil, wenn die zum Aufsetzen des Kunststoffrings ausgebildete Einlassung wenigstens teilweise gerändelt ist. Dies hat den Vorteil, daß eine Sicherung gegen ungewolltes Lösen vorhanden ist. Die Rändelung kann auch dann vorgesehen werwenn der Kunststoffring angespritzt ist, wodurch die Sicherheit weiter erhöht wird.

Gemäß der Weiterbildung nach Anspruch 6 ist unter dem Schraubenkopf ein weiterer Kunststoffring. Durch diesen zusätzlichen Kunststoffring wird zum einen die bereits hervorragende Selbstsicherung verbessert und zum anderen hat der Kunststoffring die Funktion einer Abdichtung. Eine derart ausgebilde Schraubensicherung kann als Schraube verwendet werden, welche eine Durchgangsbohrung abdichtet. In solchen Fällen verbindet sie nicht zwangsläuft zwei Teile miteinander.

Vorteilhafterweise besteht der eingespritzte Kunststoffring aus einem amorphen, thermoplastischen Polyetherimid.

Es hat sich gezeigt, daß die erfindungsgemäße Schraubensicherung insbesondere vorteilhafterweise zum Verschrauben eines Implantates mit einem Aufbau verwendet werden kann. Die erfindungsgemäße Schraubensicherung gewährleistet eine sehr gute Sicherung gegen ein Lösen eines Aufbaues eines Implantates. Bei dem Aufbau kann es sich z.B. um einen künstlichen Zahn oder um Suprakonstruktionen handeln. Der Vorteil der erfindungsgemäßen Schraubensicherung ist auch darin zu sehen, daß durch diese eine automatische Abdichtung erfolgt, so daß ein Kieferknochen nicht angegriffen werden kann.

Dadurch, daß der Kunststoffring gleichzeitig als Dichtung dient, ist es von Vorteil, wenn die Schraubensicherung als sogen. Heilschraube bei Implantaten verwendet wird. Hierunter wird eine Schraube verstanden, welche auf einen Implantatpfosten aufgesetzt wird, bis das Implantat im Kieferknochen eingeheilt ist und anschließend aus dem Implantatpfosten entfernt wird, um z.B. einen künstlichen Zahn oder eine Suprakonstruktion darauf zu befestigen. Eine Schraubensicherung mit einem Kunststoffring unterhalb des Schraubenkopfes dichtet und schirmt die Auflagefläche eines Implantatpfostens so ab, daß auf der Auflagefläche, auf welcher ein künstlicher Zahn oder eine Suprakonstruktion aufgebaut wird, kein Gewebe aufwächst. Nach dem Entfernen der Heilschraube steht eine Auflagefläche zur Verfügung, welche nicht mehr gereinigt oder sonst wie bearbeitet werden muß.

Eine weitere vorteilhafte Anwendung der erfindungsgemäßen Schraubsicherung betrifft die Schließblöcke von Brillenfassungen.

Weitere Merkmale und Vorteile werden anhand der Ausführungsbeispiele einer Schraubensicherung erläutert und zwar zeigen:
- Figur 1 und 2: den Schnitt durch einen Schließblock mit Schraubsicherung beim Eindrehen der Schraube und nach der Verbindung,
- Figur 3 und 4: den Schnitt durch einen weiteren Schließblock mit Schraubsicherung beim Eindrehen der Schraube und nach der Verbindung,
- Figur 5 und 6: den Schnitt durch zwei geschlossene Schließblock-Ausführungen einander gegenübergestellt,
- Figur 7: einen Schnitt durch eine Schraube mit einem Kunststoffring unter dem Schraubenkopf,
- Figur 8: Lösewinkel- und Lösemoment-Diagramm.

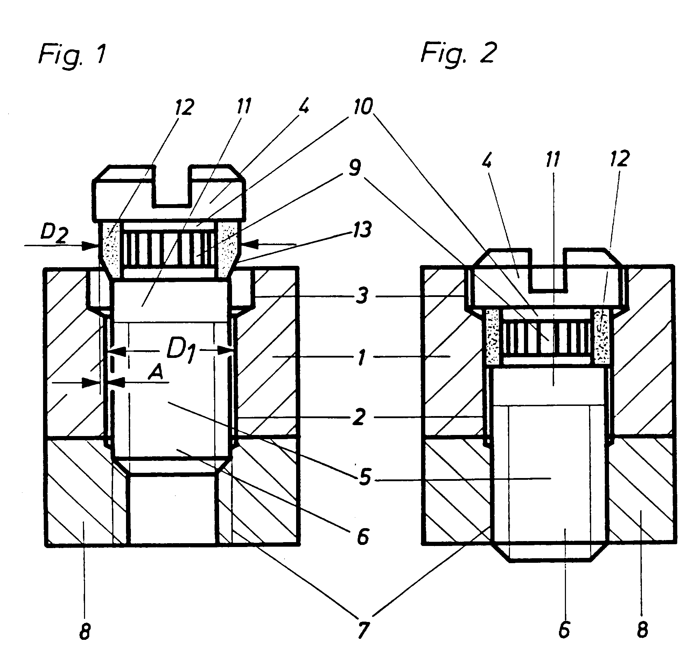

Die Figuren 1 und 2 zeigen eine Schraubensicherung für Schließblöcke an Brillenfassungen mit Metallglasrändern umfassend ein erstes Schließblockteil 1 mit einer Durchgangsbohrung 2 und einer Einsenkung 3 für einen Kopf 4 einer Sicherungsschraube 5, welche mit ihrem Schraubende 6 im Schraubgewinde 7 eines zweiten Schließblockteils 8 zum Verschließen des Schließblocks 1;8 einschraubbar ist.

Zur Sicherung gegen ungewolltes Lösen ist an der hier bei 9 gerändelten Einlassung 10 am Schraubenhals mit folgendem Ringbund 11 ein Kunststoffring 12 eingebracht bzw. eingespritzt. Der Kunststoffring 12 läuft bei 13 einbringseitig schwach konisch zu.

Das Verhältnis des Durchmessers D₂ des Kunststoffrings 12 zum Durchmesser D₁ der Durchgangsbohrung 2 beträgt hier vorzugsweise von 1,05 bis 1,09, womit sich ein übermaß A ergibt. Als Kunststoff für den Ring 12 findet vorzugsweise ein amorphes, thermoplastisches Polyetherimid Verwendung. Durch diese Anordnung ergibt sich beim öfteren Lösen und Festziehen des Schließblocks 1;8 praktisch keine Abnutzung des Kunststoffrings 12.

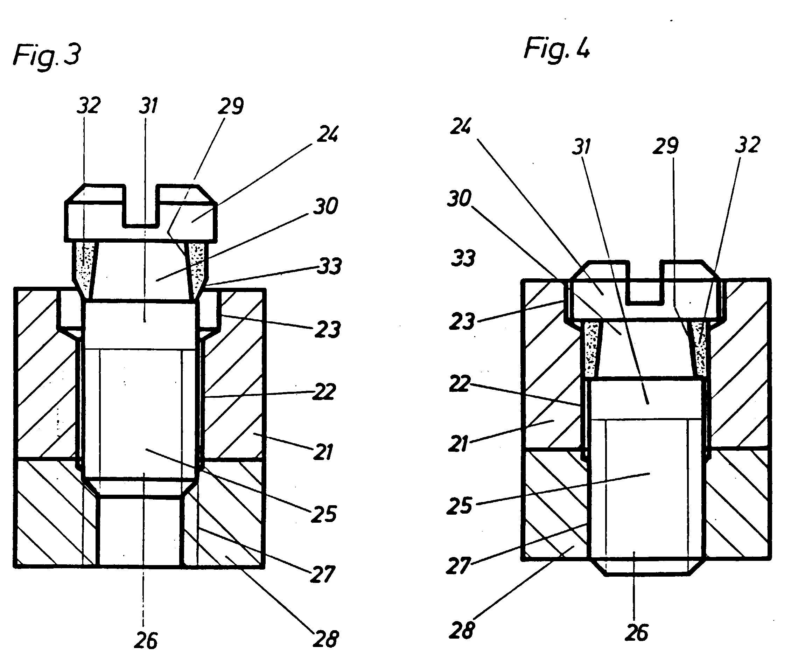

Nach Figur 3 und 4 besteht der Schließblock für Metallglasränder aus dem einen ersten Schließblockteil 21 mit Durchgangsbohrung 22 und Einsenkung 23 für den Kopf 24 der Sicherungsschraube 25, welche mit ihrem Schraubende 26 im Schraubgewinde 27 eines zweiten Schließblockteils 28 zum Verschluß des Schließblocks 21;28 einschraubbar ist. Zur Sicherung gegen ungewolltes Lösen ist hier an der bei 29 sich zum Kopf 24 hin verjüngende Einlassung 30 am Schraubenhals mit folgendem Ringbund 31 ein Kunststoffring 32 eingebracht bzw. eingespritzt. Auch hier läuft der Kunststoffring 32 bei 33 einbringseitig schwach konisch zu und das vorgeschilderte Durchmesserverhältnis D₂ zu D₁ mit entspr. Übermaß A ist gegeben. Durch die beim Kunststoffring im Ganzen gegebene Konizität ergibt sich gegenüber dem selbständigen Lösen eine erhöhte Hemmung gegenüber dem ersten Ausführungsbeispiel.

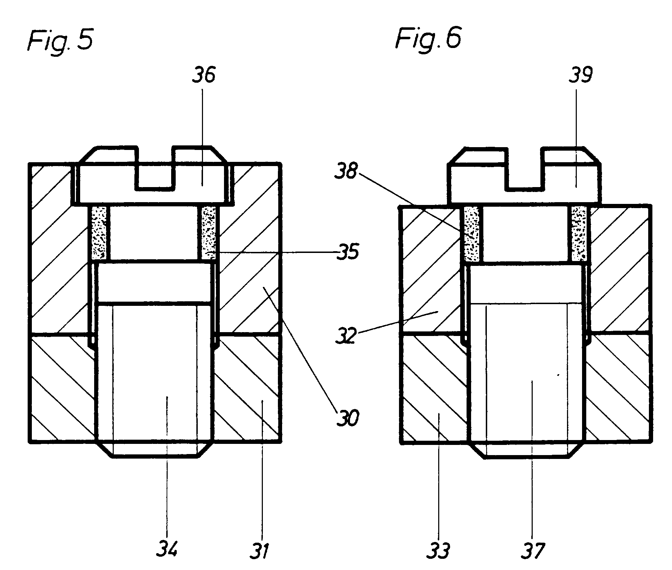

Nach den Figuren 5 und 6 sind schließlich noch zwei Schließblöcke 30;31 und 32;33 einander gegenübergestellt mit Sicherungsschraube 34 mit Kunststoffring 35 und eingesenktem Schraubkopf 36 sowie Sicherungsschraube 37 mit Kunststoffring 38 und aufgesetztem Schraubkopf 39, um auch diese Variante zu zeigen.

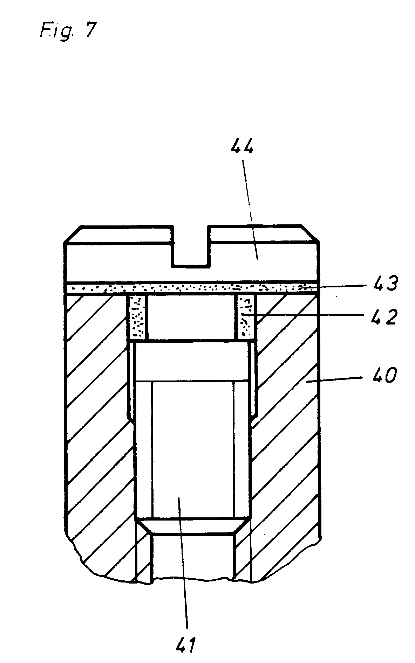

In der Figur 7 ist eine Schraube 41, welche in ein Teil 40 eingeschraubt ist, dargestellt. Bei dem Teil 40 kann es sich um einen Implantatpfosten handeln. Die Schraube 41 weist einen Kunststoffring 43 unterhalb des Schraubenkopfes 44 auf. Am Schraubenhalts ist ein Kunststoffring 42, wie bereits vorstehend dargestellt ausgebildet. Die Kunststoffringe 42;43 können ein gemeinsames Teil bilden. Die Ausbildung eines einstückigen Teils, welches die Ringe 42;43 umfaßt, hat den Vorteil, daß dieses in einem Arbeitsgang hergestellt werden kann. Der Kunststoffring 43 erhöht zum einen die Selbsthemmung und fungiert gleichzeitig als Dichtung, was bei der Verwendung als Heilschraube vom besonderen Vorteil ist.

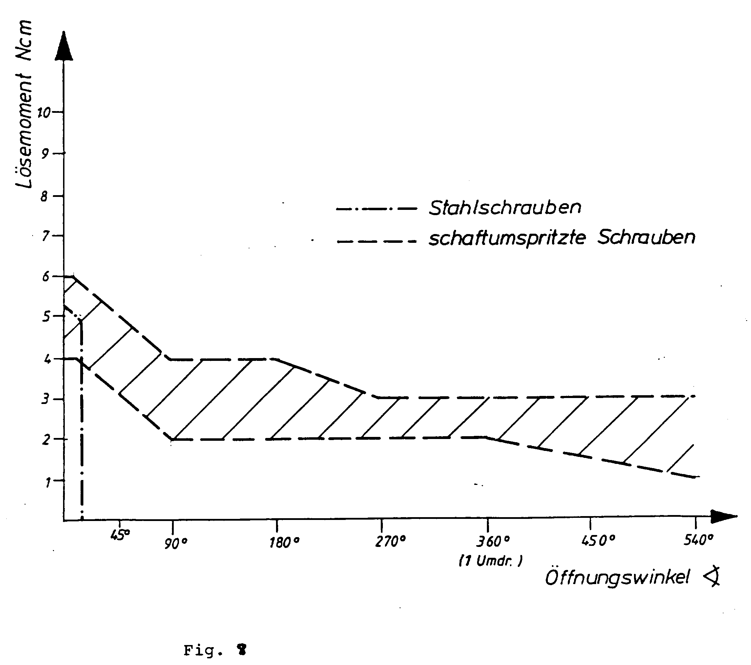

In der Figur 8 ist ein Lösewinkel-Lösemoment-Diagramm dargestellt.

In diesem Diagramm ist das Lösemoment über einen Lösungswinkel dargestellt. Schraffiert dargestellt idas Gebiet, welches bei der erfindungsgemäßen Schraubensicherung entsteht, wenn eine Schraube mehrmals angezogen und wieder gelöst wird. Die Schraubensicherung wurde zehnmal geöffnet und schlossen.

Die strichpunktierte Linie zeigt das Lösemoment einer herkömmlichen Stahlschraube über dem öffnungswinkel.

Wie aus dem Verlauf des Lösemoments über den Öffnungswinkel einer konventionellen Schraube ersichtlich ist, fällt das Lösemoment über dem öffnungswinkel rapide ab. Das heißt, daß bei nur geringen Öffnungswinkeln eine Sicherung der Schraube nicht mehr gewährleistet ist.

Bei der erfindungsgemäßen Schraubensicherung zeigt sich, daß bei einem Anzugsmoment zwischen 6 und 9 Ncm bei einem öffnungswinkel von 180°, d.h. die Schraube wurde in Löserichtung um eine halbe Drehung verdreht ein Lösemoment zwischen 2 und 4 Ncm besteht. Die Streubreite der dargestellten Fläche ist abhängig davon, wie oft die erfindungsgemäße Schraubensicherung angezogen bzw. gelöst wurde und von der Oberflächengüte des Teiles, an welches der Kunststoffring (12) zur Anlage kommt.

An dem Kunststoffring (12) entstehen zwar Reibungsverluste, diese sind jedoch so gering, daß eine Sicherung stets gewährleistet ist.

Die erfindungsgemäße Schraubensicherung kann überall dort eingesetzt werden, wo eine zuverlässige Sicherung einer Schraubverbindung gewährleistet werden muß. Die erfindungsgemäße Schraubensicherung wird vorteilhaft dort eingesezt, wo Schraubverbindungen hergestellt werden müssen, die nur sehr geringe Abmessungen einer Schraube zulassen, da durch sie die Handhabung wesentlich erleichtert wird.

So wird bei der erfindungsgemäßen Schraubensicherung keine Sicherheitsunterlagscheibe benötigt, welche bei geringen Abmessungen nur schwer handhabbar ist.

## Patentansprüche

1. Schraubsicherung zum Verbinden zweier Teile (1; 8), bestehend aus einer beide Teile (1; 8) verbindenden Schraube (5), welche auf einem ersten Teil (1) mittels Schraubenkopf (4) aufsitzt oder eingelassen und mittels Schraubenhals durchführbar sowie im zweiten Teil (8) mit einem Gewinde (7) verschraubbar ist, wobei den Schraubenhals ein Kunststoffring (12) umgibt, dessen Außendurchmesser (D₂) größer ist als der Durchmesser (D₁) einer Durchgangsbohrung (2) im ersten Teil (1) und der mit der Mantelfläche der Durchgangsbohrung (2) am ersten Teil (1) unter Reibung beim Eindrehen der Schraube (5) in das Gewinde (7) des zweiten Teils (8) zusammenwirkt, **dadurch gekennzeichnet**, daß der sich an den Kunststoffring (12) an dessen dem Schraubenkopf (4) abgewandten Ende ein Ringbund (11) anschließt, dessen Außendurchmesser größer ist als derjenige des Schraubenhalses und der nicht mit einem Gewinde versehen ist.

2. Schraubsicherung nach Anspruch 1, **dadurch gekennzeichnet**, daß der Außendurchmesser (D₂) des eingelassenen, insbesondere eingespritzten Kunststoffrings (12) zum Durchmesser (D₁) der Durchgangsbohrung (2) im Verhältnis 1,05 bis 1,09 steht.

3. Schraubsicherung nach Anspruch 1 oder 2, **dadurch gekennzeichnet**, daß der Schraubenhals mit eingelassenem Kunststoffring (12) sich zum Schraubenkopf (4) hin verjüngt.

4. Schraubsicherung nach einem der Ansprüche 1 bis 3, **dadurch gekennzeichnet**, daß sich der Kunststoffring (12) vorzugsweise unter 6° zum Schraubenkopf (4) hin radial verjüngt.

5. Schraubsicherung nach einem der Ansprüche 1 bis 4, **dadurch gekennzeichnet**, daß am Schraubenhals eine gerändelte (9) Einlassung (10) für den Kunststoffring (12) vorgesehen ist.

6. Schraubsicherung nach einem der vorhergehenden Ansprüche, **dadurch gekennzeichnet**, daß unter dem Schraubenkopf (44) ein weiterer Kunststoffring (43) vorgesehen ist.

7. Schraubsicherung nach einem der vorhergehenden Ansprüche, **dadurch gekennzeichnet**, daß der Kunststoffring (12) am Schraubenhals aus einem amorphen, thermoplastischen Polyetherimid besteht.

8. Verwendung einer Schraubsicherung nach einem der vorhergehenden Ansprüche, zum Verschrauben eines Implantats mit einem Aufbau.

9. Verwendung einer Schraubsicherung nach einen der vorhergehenden Ansprüche 1 bis 7, als Heilschraube bei Implantaten.

10. Verwendung einer Schraubsicherung nach einem der Ansprüche 1 bis 7, in einem Schließblock einer Brillenfassung.

## Claims

1. A screw fastening for connecting two parts (1; 8), comprising a screw (5) which connects the two pans (1; 8) and which is mounted on or countersunk into a first part (1) by means of a screw head (4) and can be inserted through by means of a neck and which can be screwed into the second part (8) by a thread (7), wherein the screw neck is surrounded by a plastics ring (12), the external diameter (**D**₂) of which is greater than the diameter (**D**₁) of through bore (2) in the first part (1) and which cooperates with the cylindrical surface of the through bore (2) in the first part (1) with friction as the screw (5) is screwed into the thread (7) of the second part (8), **characterized in that** an annular collar (11), the external diameter of which is greater than that of the screw neck and which is not provided with a thread, is attached to the plastics ring (12) at the end thereof remote from the screw head (4).

2. A screw fastening according to Claim 1, **characterized in that** the external diameter (**D**₂) of the inlaid, in particular injected, plastics ring (12) is in a ratio of 1·05 : 1·09 to the diameter (**D**₁) ofthe through bore (2).

3. A screw fastening according to Claim 1 or 2, **characterized in that** the screw neck with the inlaid plastics ring (12) tapers towards the screw head (4).

4. A screw fastening according to one of Claims 1 to 3, **characterized in that** the plastics ring (12) tapers radially preferably at 6° towards the screw head (4).

5. A screw fastening according to one of Claims 1 to 4, **characterized in that** a knurled (9) recess (10) is provided for the plastics ring (12).

6. A screw fastening according to one of the preceding Claims, **characterized in that** a further plastics ring (43) is provided below the screw head (44).

7. A screw fastening according to one of the preceding Claims, **characterized in that** the plastics ring (12) on the screw neck consists of an amorphous, thermoplastic polyether imide.

8. Use of a screw fastening according to one of the preceding Claims, for screwing an implant onto a structure.

9. Use of a screw fastening according to one of the preceding Claims 1 to 7, as a medical screw in implants.

10. Use of a screw fastening according to one of the preceding Claims 1 to 7, in a closure block of a spectacle frame.

## Revendications

1. Sécurité à vis pour l'assemblage de deux pièces (1 ; 8), constituée d'une vis (5) assemblant les deux pièces (1 ; 8), vis qui est encastrée dans ou repose sur une première pièce (1) par une tête de vis (4), peut passer à travers cette pièce par un corps de vis et être vissée dans la seconde pièce (8) pourvue d'un filetage (7), une bague en matière plastique (12) entourant le corps de vis, bague dont le diamètre extérieur (D₂) est supérieur au diamètre (D₁) d'un perçage traversant (2) de la première pièce (1) et qui, lors du vissage de la vis (5) dans le filetage (7) de la seconde pièce (8), coopère en friction avec la face d'enveloppe du perçage traversant (2) de la première pièce (1), **caractérisée** en ce qu'un collet annulaire (11) se raccorde à la bague en matière plastique (12) à son extrémité opposée à la tête de vis (4), collet dont le diamètre extérieur est supérieur à celui du corps de vis et qui n'est pas pourvu d'un filetage.

2. Sécurité à vis selon la revendication 1, **caractérisée** en ce que le diamètre extérieur (D₂) de la bague en matière plastique (12) encastrée, notamment par injection, se situe dans un rapport de 1,05 à 1,09 avec le diamètre (D₁) du perçage traversant (2).

3. Sécurité à vis selon la revendication 1 ou 2, **caractérisée** en ce que le corps de vis pourvu de la bague en matière plastique encastrée (12) se rétrécit par rapport à la tête de vis (4).

4. Sécurité à vis selon une des revendications 1 à 3, **caractérisée** en ce que la bague en matière plastique (12) se rétrécit radialement, de préférence de 6°, par rapport à la tête de vis (4).

5. Sécurité à vis selon une des revendications 1 à 4, **caractérisée** en ce qu'un logement (10) moleté (9) est prévu sur le corps de vis pour l'encastrement de la bague en matière plastique (12).

6. Sécurité à vis selon une des revendications précédentes, **caractérisée** en ce qu'une autre bague en matière plastique (43) est prévue en dessous de la tête de vis (44).

7. Sécurité à vis selon une des revendications précédentes, **caractérisée** en ce que la bague en matière plastique (12) prévue sur le corps de vis est réalisée en polyétherimide amorphe thermoplastique.

8. Utilisation d'une sécurité à vis selon une des revendications précédentes pour l'assemblage vissé d'un implantat avec une superstructure.

9. Utilisation d'une sécurité à vis selon une des revendications précédentes 1 à 7 comme vis curative pour des implantats.

10. Utilisation d'une sécurité à vis selon une des revendications 1 à 7 dans un bloc de fermeture d'une monture de lunettes.
